# EUROPEAN PATENT APPLICATION

(11) **EP 4 814 866 A1**
(43) Date of publication of application: **30.09.2026**
(21) Application number: 26161334.3
(22) Date of filing: 27.02.2026
(51) Int. Cl.: G06T 7/00, G06T 7/10

(54) **METHOD AND SYSTEM FOR QUALITY ASSESSMENT OF TEA BLENDING USING A DUAL SEGMENTATION TECHNIQUE**

(30) Priority: 29.03.2025 IN 202521030840
(71) Applicant: Tata Consultancy Services Limited, Mumbai, Maharashtra 400 021 (IN)
(72) Inventor: JUNAGADE, Sanket Kailas, 400601 Thane, Maharashtra (IN); BOSE CHOUDHURY, Swagatam, 400601 Thane, Maharashtra (IN); SARANGI, Sanat, 400601 Thane, Maharashtra (IN); SINGH, Dineshkumar Jang Bahadur, 400601 Thane, Maharashtra (IN); PAPPULA, Srinivasu, 500081 Hyderabad, Telangana (IN)
(74) Representative: Goddar, Heinz J.

(57) **Abstract**

This disclosure relates generally to method and system for quality assessment of physical grade tea blend using a dual segmentation technique. Tea blending quality assessments rely on manual inspection methods, which involves subjective visual evaluation of particle appearance, size, and composition. To address the challenges and maintain tea blend consistencies, the method employs a dual segmentation technique to extract spatial features and spectral features from a made-tea sample thereby assessing uniform distribution of tea particles across various grades in a physical grade tea factory. Further, bounding boxes are marked on spatial segmentation masks and spectral segmentation masks ensuring the tea blend is thoroughly evaluated without overlaps or missing key regions. Then, a blending quality score is computed which evaluates accuracy and consistencies in tea blends. The method further generates a blending quality assessment report recommending the tea factory indicating personalized improvements to adjust blending process based on the blending consistency.

## Description

### CROSS-REFERENCE TO RELATED APPLICATIONS AND PRIORITY

The present application claims priority to Indian application no. 202521030840, filed on March 29, 2025.

### TECHNICAL FIELD

The disclosure herein generally relates to tea blending quality assessment, and, more particularly, to a method and system for quality assessment of tea blending using a dual segmentation technique.

### BACKGROUND

Tea blending has evolved into a distinct industry in its own right. The introduction of packaged teas and tea bags has intensified competition and added excitement to the tea blending sector. Today, tea enthusiasts have a wide array of blends at their disposal. The art of tea blending is highly sophisticated, influenced by various factors such as climate, altitude, humidity, soil composition, and seasonal changes, all of which shape the tea's unique qualities. Essentially, tea blending involves the careful combination of multiple varieties or grades of tea sourced from different estates or regions, each contributing its own characteristics to create a unique or distinctive tea and primary challenge being the maintenance of consistency.

Current techniques for quality control in tea blending face considerable obstacles, especially in maintaining both spatial and chemical uniformity within tea blends. These techniques typically concentrate on either the physical attributes, such as particle size and shape, or the chemical attributes of the blend, neglecting a holistic integration of both elements. This segmented approach results shortcomings in identifying inconsistencies in the uniformity of tea blends. Furthermore, many quality assessments depend heavily on manual inspection or sampling, which are labor-intensive, susceptible to human error, and often inconsistent, particularly in large-scale production. Subtle differences in blending ratios or particle composition frequently escape detection with these conventional methods, adversely affecting the flavor profile and overall quality of the product. Achieving consistent distribution across grades such as orange pekoe (OP), broken orange pekoe (BOP), and fanning continues to be a significant challenge, particularly in large production batches where visual inspection or basic sieving proves inadequate.

Existing systems face significant challenges regarding automation and scalability in industrial operations. Quality control procedures tend to be sluggish and ineffective, primarily due to the absence of automated tools for real-time analysis of specific areas or for identifying inconsistencies. Current imaging techniques often fail to provide the requisite detail or accuracy needed for effective assessment of chemical composition. Additionally, the lack of a standardized metric for evaluating blend quality complicates the process of identifying deviations from target formulations across different batches. These shortcomings, coupled with insufficient mechanisms for ongoing feedback and enhancement, lead to resource wastage, production delays, and financial setbacks. As tea blends become increasingly intricate, incorporating various grades and flavoring agents, the constraints of existing methods impede their capacity to manage and verify these recipes effectively, thereby jeopardizing product consistency and customer satisfaction.

### SUMMARY

Embodiments of the present disclosure present technological improvements as solutions to one or more of the above-mentioned technical problems recognized by the inventors in conventional systems.

For example, in one embodiment, a method for quality assessment of tea blending using a dual segmentation technique is provided. The method includes acquiring by at least one spectral camera under controlled illumination, a spectral image of each made-tea sample among a plurality of made-tea samples. The spectral camera captures the spectral image over a predetermined spectral wavelength range to form a multi-dimensional spectral hypercube. Each made-tea sample comprises a blend of different physical grade according to a target recipe. Further, each slice of the spectral image is preprocessed by reducing noise and normalizing illumination.

Further, a dual segmentation technique on each slice of the pre-processed spectral image is applied to generate one or more spatial precision segmentation (SPS) masks using a spatial precision segmentation, and a one or more spectral accuracy segmentation (SAS) masks using a spectral accuracy segmentation (SAS). The spatial precision segmentation is trained to detect one or more morphological boundaries from each tea particle associated with each slice of the pre-processed spectral image. The spectral accuracy segmentation (SAS) is trained to cluster similar spectral reflectance profiles in the spectral hypercube from each tea particle associated with each slice of the pre-processed spectral image.

Furthermore, one or more bounding boxes to locate region of interests (ROI) are identified by combining the one or more spatial precision segmentation (SPS) masks and the one or more spectral accuracy segmentation (SAS) masks superimposing, the identified bounding boxes onto the original multi-dimensional spectral hypercube to extract region-specific spectral data corresponding to each ROI. Then, a feature matrix is generated by fusing a plurality of morphological features and a plurality of spatial features obtained from each bounding box. The plurality of morphological features are extracted from the one or more spatial precision segmentation (SPS) masks and the one or more spectral accuracy segmentation (SAS) masks. Then, a apply, a dimensionality reduction algorithm (DRA) on the feature matrix of each bounding box ROI to lower dimensional representations.

Then, each bounding box is classified to determine corresponding physical tea grade composition relative to the target recipe by computing a blending quality score (BQS) indicating the physical tea grade composition closeness match with the target recipe. The blending consistency of each made tea sample is validated by combining the one or more SPS masks and the one or more SAS masks to determine structural similarity. Finally, the tea factory is recommended with a blending quality assessment report indicating personalized improvements to adjust blending process based on the blending consistency, the structural similarity, the blending quality score and one or more deviations occurred in the target recipe.

In another aspect, a system for quality assessment of tea blending using a dual segmentation technique is provided. The system includes acquiring by at least one spectral camera under controlled illumination, a spectral image of each made-tea sample among a plurality of made-tea samples. The spectral camera captures the spectral image over a predetermined spectral wavelength range to form a multi-dimensional spectral hypercube. Each made-tea sample comprises a blend of different physical grade according to a target recipe. Further, each slice of the spectral image is preprocessed by reducing noise and normalizing illumination.

Further, a dual segmentation technique on each slice of the pre-processed spectral image is applied to generate one or more spatial precision segmentation (SPS) masks using a spatial precision segmentation, and a one or more spectral accuracy segmentation (SAS) masks using a spectral accuracy segmentation (SAS). The spatial precision segmentation is trained to detect one or more morphological boundaries from each tea particle associated with each slice of the pre-processed spectral image. The spectral accuracy segmentation (SAS) is trained to cluster similar spectral reflectance profiles in the spectral hypercube from each tea particle associated with each slice of the pre-processed spectral image.

Furthermore, one or more bounding boxes to locate region of interests (ROI) are identified by combining the one or more spatial precision segmentation (SPS) masks and the one or more spectral accuracy segmentation (SAS) masks superimposing, the identified bounding boxes onto the original multi-dimensional spectral hypercube to extract region-specific spectral data corresponding to each ROI. Then, a feature matrix is generated by fusing a plurality of morphological features and a plurality of spatial features obtained from each bounding box. The plurality of morphological features are extracted from the one or more spatial precision segmentation (SPS) masks and the one or more spectral accuracy segmentation (SAS) masks. Then, a apply, a dimensionality reduction algorithm (DRA) on the feature matrix of each bounding box ROI to lower dimensional representations.

Then, each bounding box is classified to determine corresponding physical tea grade composition relative to the target recipe by computing a blending quality score (BQS) indicating the physical tea grade composition closeness match with the target recipe. The blending consistency of each made tea sample is validated by combining the one or more SPS masks and the one or more SAS masks to determine structural similarity. Finally, the tea factory is recommended with a blending quality assessment report indicating personalized improvements to adjust blending process based on the blending consistency, the structural similarity, the blending quality score and one or more deviations occurred in the target recipe.

In yet another aspect, there are provided one or more non-transitory machine-readable information storage mediums comprising one or more instructions, which when executed by one or more hardware processors causes a method for quality assessment of tea blending using a dual segmentation technique. The method includes
acquiring by at least one spectral camera under controlled illumination, a spectral image of each made-tea sample among a plurality of made-tea samples. The spectral camera captures the spectral image over a predetermined spectral wavelength range to form a multi-dimensional spectral hypercube. Each made-tea sample comprises a blend of different physical grade according to a target recipe. Further, each slice of the spectral image is preprocessed by reducing noise and normalizing illumination.

Further, a dual segmentation technique on each slice of the pre-processed spectral image is applied to generate one or more spatial precision segmentation (SPS) masks using a spatial precision segmentation, and a one or more spectral accuracy segmentation (SAS) masks using a spectral accuracy segmentation (SAS). The spatial precision segmentation is trained to detect one or more morphological boundaries from each tea particle associated with each slice of the pre-processed spectral image. The spectral accuracy segmentation (SAS) is trained to cluster similar spectral reflectance profiles in the spectral hypercube from each tea particle associated with each slice of the pre-processed spectral image.

Furthermore, one or more bounding boxes to locate region of interests (ROI) are identified by combining the one or more spatial precision segmentation (SPS) masks and the one or more spectral accuracy segmentation (SAS) masks superimposing, the identified bounding boxes onto the original multi-dimensional spectral hypercube to extract region-specific spectral data corresponding to each ROI. Then, a feature matrix is generated by fusing a plurality of morphological features and a plurality of spatial features obtained from each bounding box. The plurality of morphological features are extracted from the one or more spatial precision segmentation (SPS) masks and the one or more spectral accuracy segmentation (SAS) masks. Then, a apply, a dimensionality reduction algorithm (DRA) on the feature matrix of each bounding box ROI to lower dimensional representations.

Then, each bounding box is classified to determine corresponding physical tea grade composition relative to the target recipe by computing a blending quality score (BQS) indicating the physical tea grade composition closeness match with the target recipe. The blending consistency of each made tea sample is validated by combining the one or more SPS masks and the one or more SAS masks to determine structural similarity. Finally, the tea factory is recommended with a blending quality assessment report indicating personalized improvements to adjust blending process based on the blending consistency, the structural similarity, the blending quality score and one or more deviations occurred in the target recipe.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG.1 illustrates an exemplary system to assess physical grade tea blending quality according to some embodiments of the present disclosure.
FIG.2 is a functional block diagram of a system for assessing physical grade tea blending quality using a dual segmentation technique, in accordance with some embodiments of the present disclosure.
FIGS.3A through 3B are flow diagrams illustrating a method for assessing the physical grade tea blending quality, using the system of FIG. 1, in accordance with some embodiments of the present disclosure.
FIG.4 illustrates an use case example of physical grade tea structure, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

### GLOSSARY:

The term "blending tea" refers to a process of mixing various physical grades of processed tea in designated ratios to attain a desired flavor, color, strength, aroma, or characteristics tailored to specific markets. Each grade imparts distinct physical and chemical properties to the overall blend, with the objective of fulfilling a predetermined recipe.

"Blending consistency" refers to the extent to which the actual composition of tea blend aligns with specified proportions of each physical grade outlined in the target recipe. A consistent blend demonstrates an even distribution of grades, avoiding any segregation or excessive representation of particular types. This consistency is quantitatively assessed through a blending quality score (BQS) and validated using spatial and spectral segmentation methods.

"Target recipe" refers to a predefined formulation or specification that outlines the desired percentage composition of various physical tea grades (such as OP, BOP, FOP, etc.) in a made-tea blend. The target recipe is established by tea manufacturers or buyers to achieve consistent product quality across production batches. The system compares actual blend composition to the target recipe to assess quality.

"Spatial features" refer to quantifiable morphological characteristics of tea particles that are extracted from the spatial precision segmentation (SPS) masks. These features include, but are not limited to, particle size, shape descriptors (e.g., aspect ratio, circularity, convexity, solidity), perimeter, area, and textural metrics (e.g., entropy, contrast, homogeneity using GLCM or LBP). In the context of this disclosure, "spatial features" and "morphological features" are used interchangeably, as both describe the physical structure and geometry of tea particles captured in the spatial domain. These features are critical for assessing the extent for which the tea blend conforms with the expected visual and structural characteristics defined in the target recipe.

"Spectral features" refer to indicators of the chemical composition of tea particles, derived from spectral reflectance data captured across a selected wavelength range. This range may vary depending on the specific spectral camera configuration or application requirements, and may include, for example, 400-1000 nm (visible to near-infrared), 1000-2800 nm (short-wave infrared), or the full range of 400-2500 nm.

"Physical grade" refers to classification of made-tea particles based on their physical and visual characteristics, such as size, shape, and texture.

Embodiments of the present disclosure herein provide a method and system for quality assessment of tea blending using a dual segmentation technique. The method is capable of assessing quality of tea blend eliminating manual intervention and errors thereby maintaining consistency in tea. In a tea factory, maintaining consistency in a target recipe is a challenge. The target recipe may be made-tea, or tea related products. Traditionally, tea blending quality assessments rely heavily on manual inspection methods, which involve subjective visual evaluation of particle appearance, size, and composition by skilled operators. These methods are prone to human error, lack reproducibility, and are unable to provide quantitative feedback or traceability. In contrast, the method of the present disclosure offers an automated and data-driven approach that enhances consistency, accuracy, and operational scalability. To maintain consistency, the method employs a dual segmentation technique to extract spatial features and spectral features from a made-tea sample thereby assessing uniform distribution of tea particles across various grades in a physical grade tea factory. This ensures blending ratios are accurate and consistent with the target recipe. This automates the quality control process from sample collection and image acquisition to feature extraction and analysis. Also, the dual segmentation technique ensures a complete understanding of the physical and chemical attributes of the blend, addressing gaps in traditional techniques. Further, from the made-tea sample the method captures tea particle characteristics such as particle size, shape, texture, and chemical composition. Then, custom bounding boxes are marked on spatial segmentation masks and spectral segmentation masks which ensures that each area of the blend is thoroughly evaluated without overlaps or missing key regions. Further, tea blending deviations are identified between actual blend composition and the target recipe. This allows for precise identification of shortfalls or excesses in specific tea grades, ensuring that the blend adheres to desired specifications. Finally, a blending quality score is computed which evaluates the accuracy and consistency of tea blends. By identifying key deviations and providing actionable recommendations, the method enables immediate corrections and supports ongoing optimization of the blending process. This feedback loop ensures sustained quality improvement over time. Additionally, the system is capable of handling large-scale industrial operations while remaining adaptable to varying target recipes and production requirements. This scalability ensures that the system meets the needs of both small and large tea production facilities.

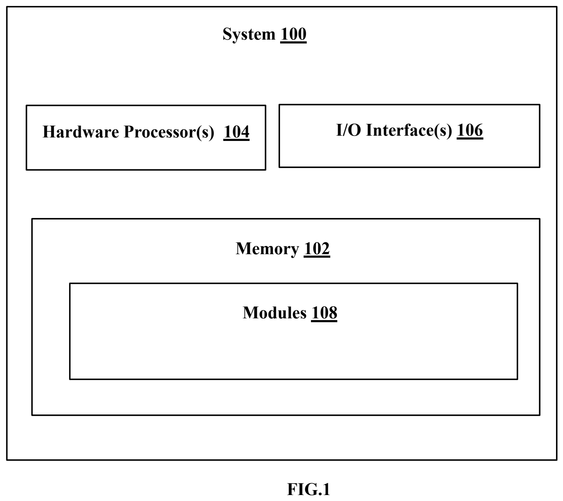

Referring now to the drawings, and more particularly to FIG.1 through FIG.4, where similar reference characters denote corresponding features consistently throughout the figures, there are shown preferred embodiments and these embodiments are described in the context of the following exemplary system and/or method.

FIG.1 illustrates an exemplary system to assess physical grade tea blending quality according to some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 may include a variety of software and hardware interfaces, for example, an image acquisition unit 202, a preprocessing unit 204, a dual segmentation unit 206, a segmentation analysis unit 208, and a blending quality score estimator 210 and the like are provided that facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices. The system 100 receives inputs from user via an application installed on user-end devices connected to the system 100 such as a laptop, handheld device or the like.

The memory 102 may include any computer-readable medium known in the art including, for example, volatile memory, such as static random access memory (SRAM) and dynamic random access memory (DRAM), and/or non-volatile memory, disks, optical disks, and magnetic tapes.

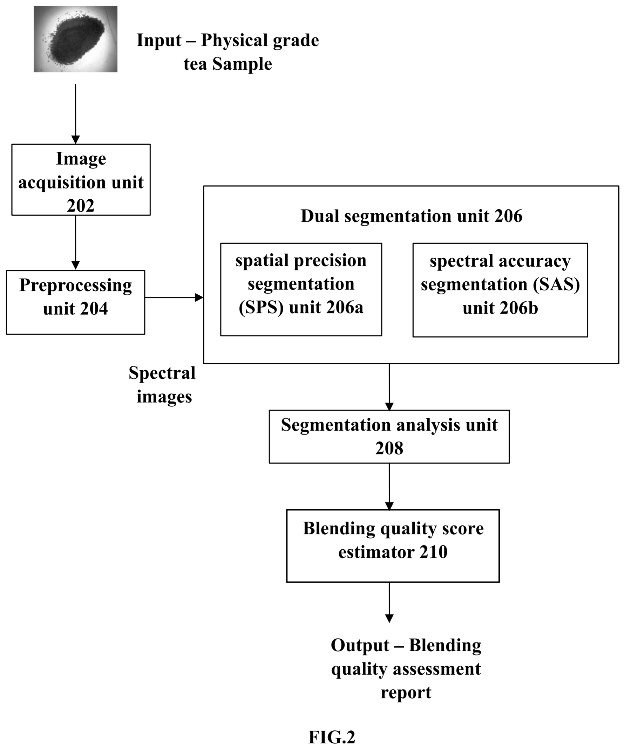

In an embodiment, the memory 102 includes a plurality of modules 110 such as an image acquisition unit 202, a preprocessing unit 204, a dual segmentation unit 206, a segmentation analysis unit 208, and a blending quality score estimator 210, and so on as depicted in FIG.2. The plurality of modules 110 include programs or coded instructions that supplement applications or functions performed by the system 100 for quality assessment of tea blending being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (as shown in FIG.2).

Further, the memory 102 may comprise information pertaining to input(s)/output(s) of each step performed by the processor(s) 104 of the system 100 and methods of the present disclosure. Further, the memory 102 includes a database 108. Although the database 108 is shown internal to the system 100, it will be noted that, in alternate embodiments, the database 108 can also be implemented external to the system 100, and communicatively coupled to the system 100. The data contained within such external database may be periodically updated. For example, made-tea sample may be added into the database (not shown in FIG.1) and/or existing data may be modified and/or non-useful data may be deleted from the database. In one example, the data may be stored in an external system, such as a Lightweight Directory Access Protocol (LDAP) directory and a Relational Database Management System (RDBMS).

FIG.2 is a functional block diagram of a system for assessing physical grade tea blending quality, in accordance with some embodiments of the present disclosure.

In an embodiment, the method of the present disclosure provides an integrated quality assessment framework to assess tea blending consistency. The system 100 handles large-scale industrial operations while remaining adaptable to varying target recipes and tea production requirements. The system 100 is deployed at the tea production factory or tea factory with spectral camera deployed at various sections to perform tea blending quality assessment. The system 100 includes the image acquisition unit 202, the preprocessing unit 204, the dual segmentation unit 206 comprises a spatial precision segmentation unit 206a and a spectral accuracy segmentation unit 206b, the segmentation analysis unit 208, and the blending quality score estimator 210.

Initially, freshly made-tea sample(s) are obtained from standard factory methods to assess quality of tea blend. The made-tea sample(s) are prepared according to a target recipe using the tea blend which is accurately mixed and processed. The spectral camera deployed in the tea factory captures a spectral image under controlled light illumination. The image acquisition unit 202 of the system 100 obtains the spectral image from the spectral camera at different intervals.

Further, the preprocessing unit 204 obtains the spectral image to preprocess for high resolution by eliminating blurred image which further performs normalization.

Then, the dual spectral segmentation unit 206 is applied on each preprocessed spectral image to crop region of interests (ROI) to create one or more bounding boxes on each candidate region using the spatial precision segmentation unit 206a and the spectral accuracy segmentation (SAS) 206b. Here, the spatial precision segmentation unit 206a detects one or more morphological boundaries of each tea particle, and the spectral accuracy segmentation (SAS) 206b obtains chemical composition associated with each tea particle.

Further, the segmentation analysis unit 208 generates a feature matrix using the outputs of the dual spectral segmentation unit 204. Finally, a blending quality score which is a quantitative measure associated with the tea particle is determined using an actual grade percentage and a target grade percentage corresponding to the target recipe to maintain a blending consistency using the blending quality score estimator 210.

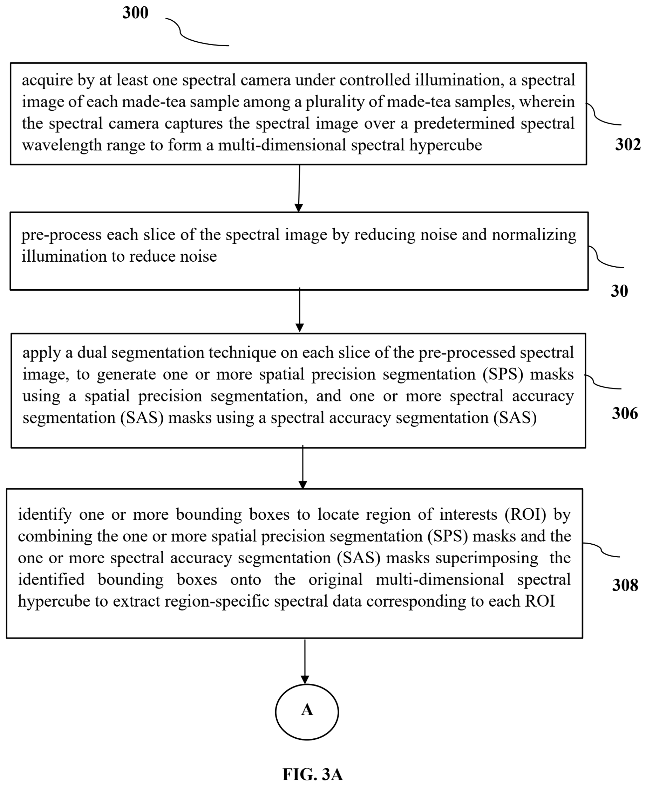

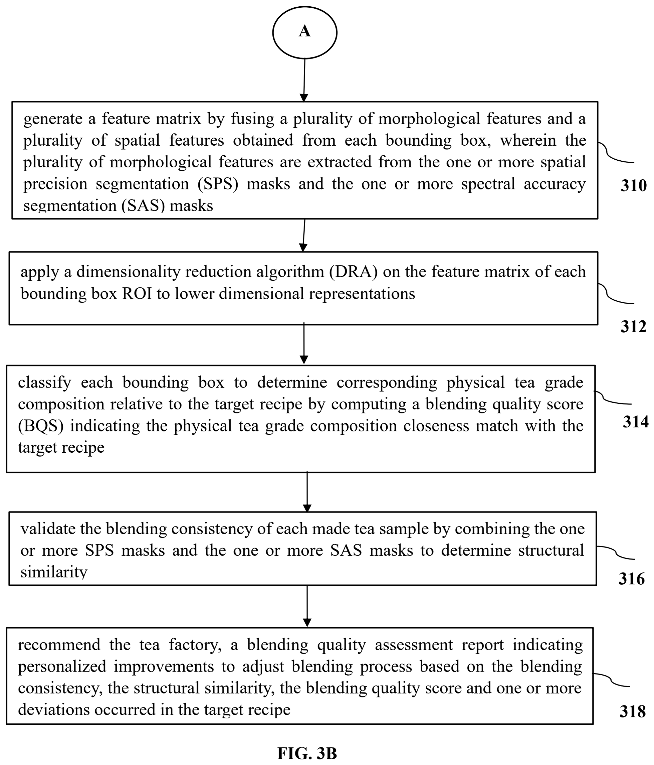

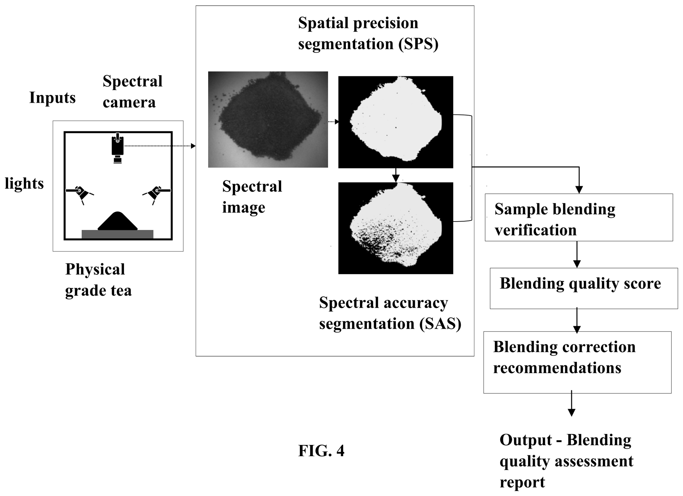

FIGS.3A through 3B are flow diagrams illustrating a method for assessing the physical grade tea blending quality, using the system of FIG. 1, in accordance with some embodiments of the present disclosure. In an embodiment, the system 100 comprises one or more data storage devices or the memory 102 operatively coupled to the processor(s) 104 and is configured to store instructions for execution of steps of the method 300 of the present disclosure will now be explained with reference to the components or blocks of the system 100 as depicted in FIG.2 the steps of flow diagram as depicted in FIG.3 and a use case example in FIG.4. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to FIGS.3A and 3B, and the steps of the method 300, at step 302 of the method 300, the one or more hardware processors 10 to acquire by at least one spectral camera under controlled illumination, a spectral image of each made-tea sample among a plurality of made-tea samples, wherein the spectral camera captures the spectral image over a predetermined spectral wavelength range to generate a multi-dimensional spectral hypercube. Each made-tea sample comprises a tea blend of different physical grade according to a target recipe.

Referring to the example FIG.4 and illustrating the process as described where the tea factory specifies the target recipe includes four physical grades in the following proportions: 40% Orange Pekoe (OP), 30% Broken Orange Pekoe (BOP), 20% Flowery Orange Pekoe (FOP), and 10% Golden Flowery Orange Pekoe (GFOP). A freshly blended made-tea sample is prepared accordingly using calibrated mixing equipment to measure and mix the appropriate quantities of each grade. The blended made-tea sample is then spread uniformly over a non-reflective black substrate to minimize background interference.

The spectral camera deployed at the tea factory is deployed with operating across a wavelength spectral range of about 400-2500 nm, designed to capture high-resolution hyperspectral images under a controlled lighting setup designed to suppress ambient noise. The image acquisition unit 202 of the system 100 obtains the spectral images captured by the spectral to generate the multi-dimensional spectral hypercube hypercube where each pixel contains detailed reflectance information across multiple bands.

At step 304 of the method 300, the one or more hardware processors 104 to preprocess each slice of the spectral image by normalizing illumination to reduce noise. For the above example, the preprocessing unit 204 obtains the spectral image by removing grayscale conversion to remove gaussian blur on each grayscale to smooth out random noise and soften sharp edge. Then, histogram equalization is applied on each blurred image to improve contrast of distinguishable spectral features. Further, the spectral image undergoes preprocessing to enhance clarity and prepares for segmentation. This includes grayscale conversion, gaussian blur to reduce high frequency noise and histogram equalization to normalize contrast across the spectral image. Band selection may also be optionally applied to focus on the most relevant spectral wavelengths associated with tea particle composition.

Now at step 306 of the method 300, the one or more hardware processors 104 to apply a dual segmentation technique on each slice of the pre-processed spectral image to generate a one or more spatial precision segmentation (SPS) masks using a spatial precision segmentation, and a one or more spectral accuracy segmentation (SAS) masks using a spectral accuracy segmentation (SAS).

Further, the pre-processed spectral image is passed to the dual segmentation unit 206 and each slice of the pre-processed spectral image is obtained by the trained spatial precision segmentation unit 206a to detect one or more morphological boundaries from each tea particle associated with each slice of the pre-processed spectral image. These profiles are extracted from the spectral hypercube, which spans the entire captured wavelength range (e.g., 400-2500 nm).

Then, the trained spectral accuracy segmentation unit (SAS) 206b processes each slice of the pre-processed spectral image to cluster similar spectral reflectance profile(s) in the spectral hypercube from each tea particle based on spectral reflectance similarity. Here, the clustering may be for example K-means or gaussian mixture models (GMM) to group pixels based on the spectral reflectance profiles of corresponding tea particle. The output of the dual segmentation unit 206 results in creation of spectral masks where each cluster reflects a unique spectral characteristics aiding in grade differentiation.

At step 308 of the method 300, the one or more hardware processors 104 to identify one or more bounding boxes to locate region of interests (ROI) by combining the one or more spatial precision segmentation (SPS) masks and the one or more spectral accuracy segmentation (SAS) masks. The one or more SPS masks and the one or more SAS masks are generated using a downscaled spectral image derived from the spectral hypercube, where the downscaled image may consist of a single spectral band (1-band) or a composite three-band (3-band) image, selected based on domain-specific knowledge or via automated dimensionality reduction algorithms (DRA) to optimize segmentation accuracy. To ensure each bounding box captures significant and non-redundant information, the bounding box creation process includes pixel-level intersection validation, minimum coverage checks, and spatial diversity enforcement.

This combinatory approach ensures selected regions contain both defined morphological structures and chemically distinct particle compositions which enables robust feature extraction for downstream analysis. Following identification, the validated bounding boxes are then superimposed onto the original full-resolution spectral hypercube to extract region-specific spectral reflectance profiles, thereby preserving the spectral richness required for accurate grade classification and dimensionality reduction. The outputs of the dual segmentation unit 206 are used to identify the one or more bounding boxes to locate region of interests (ROI) as top-left (x, y) and dimensions (w, h) by initially marking one or more candidate regions based on the one or more pixels level spatial precision segmentation (SPS) masks and the one or more pixels level spectral accuracy segmentation (SAS) masks overlaps above a predefined threshold. The predefined threshold may be for example 80% ensuring that each region contains valid morphological and spectral content. Further, each candidate bounding box is validated to confirm that it covers a minimum percentage for example 65% of segmented pixels to avoid boxes with insufficient tea-particle. Each mask is further refined by subtracting areas where the SAS is present from the SPS masks, creating an SPS mask(s) that ensures coverage of structurally unique but spectrally underrepresented regions. Then, overlapping bounding boxes are prevented by implementing a collision detection mechanism. A validation function checks both overlap and the proportion of non-zero pixels inside each bounding box to enforce the content integrity and uniqueness of ROIs. For example, checking if two rectangles share any overlapping pixels This helps a newly identified bounding box to repositioned, merge, or discarded if it intersects an existing bounding box. To avoid redundancy and ensure coverage diversity, the method uses a collision detection mechanism to prevent bounding boxes from significantly overlapping. If two or more bounding boxes intersect or cover the same region, the newly identified box is either adjusted in position, merged with an existing bounding box if they relate to the same particle cluster, or discarded based on spatial content.

The collision detection mechanism utilizes bounding box intersection logic to assess overlaps at the pixel or coordinate-level. For each bounding box defined by the coordinates (*x*₁, *y*₁, *w*₁, *h*₁) are compared against previously validated boxes (*x*₂, *y*₂, *w*₂, *h*₂) based on a specific criteria. Initially, overlaps are checked for collisions by verifying if the boundary boxes intersect according to the conditions: *x*₁ *< x₂* + *w*₂ and *x*₁ + *w*₁ > *x*₂ and *y*₁ < *y*₂ + *h*₂ and *y*₁ + *h*₁ > *y*₂. Additionally, resolution is achieved by adjusting the position of each bounding box to a nearby valid location. If both boxes belong to the same segmented particle or spectral cluster, they may be merged. However, if repositioning or merging is not feasible or creates ambiguity, those options are discarded. Only bounding boxes with sufficient segmented content are determined by non-zero pixel count within the region of interest (e.g., at least 80% of the bounding box area) are retained. The said collision detection mechanism enhances spatial diversity across regions of interest (ROIs) while preventing duplication and overlapping to improve the quality and reliability of feature extraction. Then, each validated bounding box coordinates are mapped into a raw spectral data to facilitate direct extraction of reflectance profiles from each bounded region of interest. Each validated bounding box is then mapped directly into the raw spectral hypercube to extract reflectance profiles. This mapping ensures that the region specific spectral data is aligned precisely with the plurality of morphological features within the same ROI. The selected bounding boxes are also visualized for auditability and review, confirming spatial non-overlap and uniform feature spread across the blend.

In one embodiment, the dual segmentation unit 206 automates the one or more bounding box selection by obtaining defined supporting functions such as extracting ROI from the spectral image given as top-left (x, y) and dimensions (w, h). Each of the spatial precision segmentation (SPS) masks are loaded in grayscale as (non-zero = tea particle, zero = background) for identifying non-zero points representing segmented tea regions. Then, coordinates are initialized such as bounding box properties list, and counter. A random sampling mechanism selects candidate positions for bounding boxes only from non-zero pixels to ensure that candidate ROIs lie within segmented regions. Bounding box dimensions can be user-defined or adaptive based on particle density.

Further, non-overlapping bounding boxes are drawn *whilenum_{boxes} < nb* and there are non-zero points by randomly selecting a starting point from the non-zero pixels. Then, each of the bounding box with random or fixed dimensions are set to validate feasibility which fits within image boundaries, and no overlap with existing boxes and that covers only segmented (non-zero) regions. And, if valid bounding box is identified, bounding box properties with list and coordinates are added to increment. This process ensures statistical coverage of all segmented clusters while reducing redundancy. A maximum box limit *(nb)* prevents overfitting and maintains computational tractability.

Further at step 308 of the method 300, the one or more hardware processors 104 to generate a feature matrix by fusing a plurality of morphological features and a plurality of spatial features obtained from each bounding box, wherein the plurality of morphological features are extracted from the one or more spatial precision segmentation (SPS) masks and the one or more spectral accuracy segmentation (SAS) masks.

For the above example, the segmentation analysis unit 208 of the system 100 generates the feature matrix by extracting the plurality of morphological features from each bounding box of the one or more pixel level spatial precision segmentation (SPS) masks characterizing spatially segmented tea particles which includes particle size, aspect ratio, convexity, shape descriptors, and a texture analysis. The texture analysis on each region of interest is performed using one or more texture metrics, thereby capturing surface granularity or uniformity of tea particles.

Here, the spatial characteristics of each tea particle may include, but are not limited to particle size may include area, perimeter and bounding box dimensions. Shape descriptors may include aspect ratio, circularity, convexity and solidity. The one or more texture metrics includes local binary patterns (LPB), entropy, contrast, homogeneity (e.g., via GLCM). Similarly, geometric features includes major and minor axis lengths and eccentricity.

Then, the plurality of spatial features are extracted by averaging spectral reflectance values from each bounding box coordinates of the one or more pixel level spectral accuracy segmentation (SAS) masks by obtaining a representative reflectance profile indicative of chemical composition. The spectral reflectance values are normalized for illumination variations and camera sensitivity to generate the feature matrix by combining the plurality of morphological features and the plurality of spatial features.

Sequentially, the method extracts the plurality of spectral features from the same bounding box by referencing the coordinates directly on the raw spectral data cube. The plurality of spectral features represents chemical composition of corresponding tea particle. The feature matrix may include row individual bounding boxes (i.e., distinct ROIs) and column combination of morphological and spectral features. The consolidated matrix is then passed to the next step for dimensionality reduction algorithm (DRA) using principal component analysis (PCA) to retain the most meaningful features while improving computational efficiency for classification.

At step 310 of the method 300, the one or more hardware processors 104 apply a dimensionality reduction algorithm (DRA) on the generated feature matrix of each bounding box ROI to lower dimensional representations. While Principal Component Analysis (PCA) may be used as a default technique to reduce dimensionality by retaining the components that capture the majority of data variance, the method is not restricted to PCA. Other dimensionality reduction techniques such as Genetic Algorithms (GA), t-Distributed Stochastic Neighbor Embedding (t-SNE), Uniform Manifold Approximation and Projection (UMAP), Linear Discriminant Analysis (LDA), or Autoencoder-based methods may also be employed depending on the data distribution, computational constraints, and model performance requirements. The selected technique transforms each bounding box feature vector into a reduced representation suitable for subsequent classification into tea grades.

This DRA-transformed dataset serves as the input for subsequent classification performed by the trained latent variable model (LVM). Each transformed feature vector, corresponding to a specific bounding box (ROI), captures the most significant morphological and spectral attributes of the tea particles. To classify these bounding boxes into their respective physical tea grades, a trained Latent Variable Model (LVM)-which may include, but is not limited to, Partial Least Squares Discriminant Analysis (PLS-DA), Principal Component Regression (PCR), PCA-based classification, Canonical Correlation Analysis (CCA), or other dimensionality-reducing discriminative models are employed, enabling flexible and robust classification based on both morphological and spectral features. This LVM is trained on a reference grade profile database with well-known, validated samples, where each tea grade (e.g., OP, BOP, FOP, GFOP) is characterized with its average morphological and spectral feature distribution. The model compares dimensionality reduction algorithm reduced feature vectors of incoming samples against these reference profiles to predict the grade class of each bounding box. These individual classifications are then aggregated across all ROIs to determine the overall blend composition, which is further used in computing the blending quality score (BQS) relative to the predefined target recipe.

Dimensionality reduction algorithm (DRA) is applied to the combined feature matrix to reduce dimensionality while retaining the most discriminative features. The input matrix is mean centered, scaled, and decomposed into eigenvectors and eigenvalues. Principal components explaining at least 95% of the variance are retained, typically resulting in 3-10 spectral bands depending on the dataset complexity. This transformation yields a compact dataset where each row corresponds to a bounding box and each column represents a principal component. The dimensionality reduction technique transformation aids in minimizing noise, reducing computational cost, and improving the performance of downstream classification models, such as the Latent Variable Model (LVM) used in the next step.

Further, at step 312 of the method 300, the one or more hardware processors 104 to classify each bounding box to determine corresponding physical tea grade composition relative to the target recipe by computing a blending quality score (BQS) indicating the physical tea grade composition closeness match with the target recipe.

Further, the output from above step 310 is obtained along with a target blend ratio defined by the tea manufacturer according to the target recipe. Here, the feature matrix with reduced dimensionality is obtained by applying the DRA. The DRA captures majority of total variance by transforming each bounding box feature vector into a lower dimensional representation. Then, each bounding box transformed feature vector using a latent variable model (LVM) trained on known reference grades, aggregating classifications across bounding boxes to estimate an overall composition of each tea grade within the blend. Finally, the blending quality score (BQS) is computed by comparing the estimated actual grade percentages with the target recipe proportions and categorizing the resulting blending quality score quality as high, medium, and low based on a predefined threshold.

The blending quality score is represented in Equation 1, $BQS = \frac{1}{m} {\sum }_{j = 1}^{m} \left(1-{Δ}_{j}\right)$ Where, m is a number of physical grades. ${Δ}_{j} = \frac{{P}_{j - {T}_{j}}}{{T}_{j}} V$ where, *Pⱼ* is actual percentage of grade *j and Tⱼ* is target percentage of grade j. The blending quality score is categorized as high if the actual grade value exceeds a target grade percentage *BQS* ≥ 0.95. The blending consistency is categorized as medium minor deviations between 80 ≤ *BQS* ≤ 0.95 if minor deviations exist but remain within an operational tolerance. The blending consistency is categorized as low *BQS* ≤ 0.95 if significant deviations are detected, requiring process correction. This classification is based on the similarity of the bounding box principal components to reference grade profiles. Each reference grade profile is a standardized representation of a tea grade average morphological and spectral characteristics derived from validated historical data. The LVM model compares the DRA transformed features of each bounding box with the reference profile and assigns a grade label to each ROI. It then aggregates these assignments across all bounding boxes in the sample to calculate the predicted grade distribution (i.e., the proportion of each grade present in the blend). This enables further analysis in subsequent steps to determine blending quality, calculate deviation, and trigger corrective feedback if needed.

The dimensionality reduction algorithm is applied on the dataset obtained from the previous step that serves as the base for classification. Each transformed feature vector, associated with a specific bounding box (Region of Interest) encapsulates most critical morphological and spectral features of the tea particles. To categorize these bounding boxes into their corresponding physical tea grades, a trained latent variable model (LVM) is utilized. This model may encompass various techniques, including but not limited to partial least squares discriminant analysis (PLS-DA), principal component regression (PCR), PCA-based classification, canonical correlation analysis (CCA), and other discriminative models that reduce dimensionality. The said dimensionality reduction algorithm allows for a flexible and robust classification based on both morphological and spectral features.

In another embodiment, the LVM is trained using a reference database of grade profiles that includes known and validated samples, with each tea grade (such as OP, BOP, FOP, GFOP) defined by its average distribution of morphological and spectral features. LVM evaluates the feature vectors reduced through the dimensionality reduction technique, of incoming samples against these reference profiles to predict the grade class for each bounding box. The individual classifications are then compiled across all ROI to ascertain the overall blend composition which is subsequently used to calculate the blending quality score (BQS) in relation with the established target recipe.

Now at step 314 of the method 300, the one or more hardware processors 104 to validate the blending consistency of each made tea sample by combining the one or more SPS masks and the one or more SAS masks to determine structural similarity. Here, a structural similarity index measure (SSIM) is applied to compare the one or more spatial masks and the one or more spectral segmentation masks. Then, a similarity threshold is defined to determine whether the tea blend is uniformly mixed. This further, validates the blending consistency if the SSIM exceeds the structural similarity threshold confirming that the blend is properly mixed, and if the SSIM falls below the similarity threshold, identifying blending inconsistencies and triggering corrective actions. For example, the structural similarity threshold may be 0.90. If SSIM ≥ 0.90, the one or more SPS masks and the one or more SAS masks are considered structurally consistent, indicating that the spatial and spectral properties of tea particles are well-aligned. This confirms that the made-tea sample is properly blended. And, if SSIM < 0.90, significant mismatch between the plurality of morphological features and spectral segmentation are observed. This suggests inconsistencies in blending, such as segregation or poor distribution of certain grades, and triggers the method to skip quality scoring instead proceed to correction recommendations. This validation step ensures that blending quality scores are only computed for samples that meet a basic structural integrity threshold maintaining the reliability and integrity of the automated assessment process.

Finally at step 316 of the method 300, the one or more hardware processors 104 to recommend the tea factory a blending quality assessment report indicating personalized improvements to adjust blending process based on the blending consistency, the structural similarity, the blending quality score and one or more deviations occurred in the target recipe.

Once the structural similarity validation is completed from the above step, actionable guidance is provided to the tea factory to correct discrepancies and maintain ongoing blending quality. The blending quality assessment report with personalized improvements are recommended to the tea factory with actionable insights. This includes a detailed breakdown of the blending quality score (BQS) and detected anomalies, and suggests corrective actions. For example, the corrective actions includes adjusting the ratio of specific tea grades in the blend, optimizing the mixing process by modifying duration, speed, or sequence, and implementing a feedback loop wherein continuous monitoring and reassessment ensure blending accuracy over successive production batches.

In another embodiment, the blending quality assessment report includes personalized corrective recommendations such as adjusting tea grade ratios (e.g., "Increase GFOP by 3%," "Reduce BOP by 2%") to restore blend conformity. The blending quality assessment report may also suggest mixing process optimization by altering blending duration or speed to enhance homogeneity. Additionally, the method supports retraining of the dual segmentation unit 206 when changes in blend composition are detected, ensuring the feedback loop remains adaptive and relevant to ongoing production variations. Blending process optimization involves modifying the blending duration, adjusting the mixer speed, or changing the ingredient addition sequence to improve homogeneity. Source grade quality monitoring ensuring that the incoming physical grades match expected specifications in terms of particle size, texture, and chemical composition. Additionally, the method provides long-term improvement strategies including equipment recalibration, particularly for mixers, feeders, or imaging hardware. Retraining of classification and segmentation models using newly labeled data if recipe profiles or raw material sources evolve. Trend analysis of recurring anomalies for predictive maintenance or upstream process refinement.

Based on the computed blending quality score (BQS) and the results of blending consistency validation (e.g., SSIM), the method generates a comprehensive blending quality assessment report tailored to the specific production batch. This report includes a grade-wise breakdown of the BQS, detailing variance between actual and target blend compositions, as defined in the target recipe. The method automatically identifies and flags any grade-level anomalies and deviations, such as overrepresented or underrepresented physical tea grades, and maps their spatial distribution across the analysed sample image using SPS/SAS segmentation overlays. This precise localization of deviation is not feasible with manual methods and allows for target corrections.

In the tea factory implementation settings, the method not only identifies blending inconsistencies but also executes real time automated adjustments for the tea blending process through direct integration with production hardware. By continuously analysing the alignment of the one or more SPS masks and the one or more SAS masks, the method detects deviations in both morphological and spectral domains. These deviations are quantitatively validated using the BQS and the structural similarity metrics such as SSIM. Once the method identifies a drop in BQS below the predefined threshold SSIM (e.g., BQS < 0.90) or observes an SSIM mismatch, it leverages a reinforcement learning (RL) agent driven feedback mechanism to optimize blending parameters. This mechanism dynamically reconfigures mixing speeds, blending durations, and feeder rates by continuously learning from historical data and real-time sensory inputs. Through real-time digital control signals dispatched to programmable logic controllers (PLCs), the RL agent autonomously tunes blending operations and updates its decision policies to accommodate changes in raw material properties, equipment wear, and recipe variations. Consequently, the method implements corrective measures without manual intervention, minimizing human error, reducing the risk of reprocessing or batch rejection, and ensuring product consistency at scale.

RL agent deployed in the tea factory optimizes tea blend quality and uniformity while minimizing operational overhead such as time and energy usage resulting adjusting the blending process.

To monitor at a defined state space, the RL agent obtains the plurality of morphological features, the plurality of spectral features, the blending quality score, the structural similarity index measure (SSIM), and a plurality of real time operational variables including a mixer, speed, blending duration and energy usage. For example, at any time step t, the tea factory is characterized by a state vector S(t) that includes, the blending quality score indicating alignment with the target recipe, the SSIM(t) comparing the one or more SPS masks and the one or more SAS masks, the plurality of spectral features and the plurality of morphological features provides metrics such as particle-size distributions, texture, and reflectance uniformity. Operational variables at this state includes process specific controls such as blending duration (in seconds), feeder speed, and energy consumption of the mixer unit. The reinforcement learning (RL) agent utilized for optimizing tea blending parameters may be implemented using a variety of RL algorithms selected based on complexity of state representations, action spaces, and real-time decision-making requirements within the tea blending environment. Suitable RL algorithms include, but are not limited to, tabular methods such as Q-Learning and SARSA for low-dimensional control tasks, and deep reinforcement learning methods such as Deep Q-Networks (DQN), Double DQN, Advantage Actor-Critic (A2C/A3C), and Proximal Policy Optimization (PPO). In an embodiment, Proximal Policy Optimization (PPO) is preferred due to its policy-gradient-based optimization, clipped surrogate objective, and ability to handle high-dimensional input features such as those derived from spectral hypercubes and morphological segmentation masks. PPO further enables integration with convolutional neural network (CNN) architectures for processing visual and spatial inputs derived from the one or more spatial precision segmentation (SPS) and the one or more spectral accuracy segmentation (SAS) masks. This allows the RL agent to learn robust policies over continuous and discrete action spaces including but not limited to mixer speed adjustments, blending duration changes, and proportional control of tea-grade feeders. The selected RL agent is configured to receive a composite state vector comprising the blending quality score (BQS), the structural similarity index (SSIM), the plurality of morphological and the plurality of spectral features, and real-time operational parameters (e.g., mixer RPM, energy consumption). The RL agent executes policy decisions to maximize cumulative reward based on a multi-objective reward function designed to jointly optimize blend consistency and operational efficiency across successive tea production batches.

Further, at every time step, the RL agent performs at every action space (s) an action to be executed in the tea factory. Here, at each time step the RL agent selects an action *a*(*t*) ∈ *A*(*t*), where actions may involve incrementing or decrementing mixer speed (RPM), adjusting blending duration (in seconds or minutes) and modifying feeder rates for different tea grades.

To perform state transitions, when the action *a*(*t*) is applied, the method transitions to a new state *S(t +* 1) updating a change in state of the RL agent on successful execution of the action reflecting updated quality scores, similarity indices, and the plurality of morphological, the plurality of spectral features captured via real-time sensors.

Then, a reward (R) for the RL agent is assigned at every time step (t+1) by computing a weighted combination of in quality metrics and penalties for resource usage as defined below in Equation 2, $\begin{matrix}R \left(t+1\right) = α ∗ \left[BQS\left(t+1\right)-BQS\left(t\right)\right] + ϕ ∗ \left[SSIM\left(t+1\right)-SSIM\left(t\right)\right] \\ - γ ∗ Time \left(t+1\right) - δ ∗ Energy \left(t+1\right)\end{matrix}$ Where, *α*, *ϕ* are positive weighting coefficients rewarding improvements in BQS and SSIM, respectively. *γ*, *δ* are penalty weights for increased blending time and energy consumption. All parameters at t + 1 reflect the system state after applying action a(t). Over repeated production cycles, the RL agent seeks to learn an optimal policy *π* that maps states to actions in order to maximize the expected cumulative reward. The learning objective is given below in Equation 3, ${{π}^{︷}}^{max} E \left[{\sum }_{t = 0}^{∞} {γ}^{t} R \left(t\right)\right]$ where y ∈ (0,1) is the discount factor used to prioritize immediate rewards over distant future rewards.

While embodiments of the present disclosure have been illustrated with reference to tea blending applications, the disclosed system, encompasses dual segmentation techniques for spatial and spectral analysis, reinforcement learning driven optimization, and LLM-assisted diagnostic analytics, is not limited solely to the tea industry. The invention described may be advantageously adapted to a wide range of industrial blending scenarios that require precise homogeneous blending, including but not limited to coffee blending, pharmaceutical granulation, chemical mixing, food product formulation, and cosmetic product homogenization. In such industrial contexts, ensuring homogeneous blending uniformity, consistent particle distribution, precise adherence to target formulations, real-time corrective adjustments, and automated quality assessments are critical for maintaining product standards and operational efficiency. Consequently, the principles, methodologies, algorithms, and systems described herein are broadly applicable and adaptable to multiple sectors beyond the specific exemplary use-case, thus significantly extending the utility and scope of the claimed invention.

Additionally, to further enhance interpretability, decision-making, and operational transparency, the system integrates a Large Language Model (LLM)-powered analytics engine that synthesizes results from the reinforcement learning agent across multiple production batches. The LLM ingests structured data including blending quality scores (BQS), structural similarity indices (SSIM), RL generated parameter adjustments, historical batch data, and operational feedback to automatically generate natural language insights and actionable recommendations. These insights encompass identification of recurring blending anomalies, predictive alerts regarding equipment degradation, suggestions for proactive maintenance schedules, and recommendations for recipe modifications based on evolving raw-material characteristics. The system outputs this synthesized information to a dedicated user-interface dashboard, which dynamically displays real-time process analytics and facilitates intuitive decision-making for factory operators. This LLM integration thus bridges the gap between complex numerical reinforcement learning outcomes and human-readable operational intelligence, significantly enhancing the effectiveness, scalability, and strategic alignment of the tea blending quality assurance process.

The integration of the Large Language Models (LLM) with the reinforcement learning (RL) framework enhances the technical capabilities of the disclosed system. In particular, the integrated analytics engine facilitates the following: a. Systematic Deviation Identification: This feature automates the analysis of sequential adjustments in reinforcement learning and blending quality score (BQS) data to identify systematic deviations that may indicate a decline in blending uniformity or recurring inconsistencies, thus guiding the retraining or recalibration of the RL models.

b. Predictive Operational Diagnostics: Utilizing correlation based analytics, this function predicts machinery performance degradation by analyzing patterns in reinforcement learning parameter changes and variations in the structural similarity index (SSIM), thereby proactively signaling the need for maintenance.

c. Dynamic Recipe Adaptation: This capability involves the analytical interpretation of ongoing deviations in spectral and morphological feature distributions, allowing for the automatic generation of recommended adjustments to recipe parameters in response to changes in raw material properties or sourcing variability.

d. Automated Anomaly Explanation: This feature provides real-time generation of explanatory narratives that elucidate the reasons behind significant adjustments in process parameters derived from reinforcement learning, enabling operators to make immediate corrective decisions. These LLM-driven enhancements transform numerical outputs from reinforcement learning into structured textual diagnostics and actionable recommendations for processes, significantly improving operational responsiveness, process transparency, and decision-making effectiveness within the tea-blending quality assessment and optimization workflow. These LLM-driven technical enhancements convert numerical reinforcement learning outputs into structured textual diagnostics and actionable process recommendations, significantly augmenting operational responsiveness, process transparency, and decision-making efficacy within the tea-blending quality assessment and optimization workflow.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of quality assessment. The embodiment, thus provides method and system to assess quality of tea blend using a dual segmentation technique. Moreover, the embodiments herein further provides accurate identification and quantification of each physical grade present in the made-tea sample Moreover, the embodiments herein further provide a closed-loop feedback mechanism that computes a Blending Quality Score (BQS) which validates blend uniformity using structural similarity (SSIM), and delivers actionable correction recommendations to improve blend ratios, mixing parameters, and overall consistency. This ensures continuous process optimization and supports high-throughput, scalable quality control in both small and large-scale tea factory setups.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) to assess tea blend quality, the method further comprising:
acquiring (302) by at least one spectral camera under controlled illumination via one or more hardware processors, a spectral image of each made-tea sample among a plurality of made-tea samples, wherein the spectral camera captures the spectral image over a predetermined spectral wavelength range to form a multi-dimensional spectral hypercube, wherein each made-tea sample comprises a blend of different physical grade according to a target recipe;
pre-processing (304) via the one or more hardware processors, each slice of the spectral image by normalizing illumination to reduce noise;
applying (306) a dual segmentation technique on each slice of the pre-processed spectral image via the one or more hardware processors, to generate one or more spatial precision segmentation (SPS) masks using a spatial precision segmentation, and a one or more spectral accuracy segmentation (SAS) masks using a spectral accuracy segmentation (SAS);
wherein the spatial precision segmentation is trained to detect one or more morphological boundaries from each tea particle associated with each slice of the pre-processed spectral image, and
wherein the spectral accuracy segmentation (SAS) is trained to cluster similar spectral reflectance profiles in the spectral hypercube from each tea particle associated with each slice of the pre-processed spectral image;
identifying (308) via the one or more hardware processors, one or more bounding boxes to locate region of interests (ROI) by combining the one or more spatial precision segmentation (SPS) masks and the one or more spectral accuracy segmentation (SAS) masks superimposing, via the one or more hardware processors, the identified bounding boxes onto the original multi-dimensional spectral hypercube to extract region-specific spectral data corresponding to each ROI;
generating (310) a feature matrix by fusing a plurality of morphological features and a plurality of spatial features obtained from each bounding box via the one or more hardware processors, wherein the plurality of morphological features are extracted from the one or more spatial precision segmentation (SPS) masks and the one or more spectral accuracy segmentation (SAS) masks;
applying (312) via the one or more hardware processors, a dimensionality reduction algorithm (DRA) on the feature matrix of each bounding box ROI to lower dimensional representations;
classifying (314) via the one or more hardware processors, each bounding box to determine corresponding physical tea grade composition relative to the target recipe by computing a blending quality score (BQS) indicating the physical tea grade composition closeness match with the target recipe;
validating (316) via the one or more hardware processors the blending consistency of each made tea sample by combining the one or more SPS masks and the one or more SAS masks to determine structural similarity; and
recommending (318) the tea factory via the one or more hardware processors, a blending quality assessment report indicating personalized improvements to adjust blending process based on the blending consistency, the structural similarity, the blending quality score and one or more deviations occurred in the target recipe.

2. The processor-implemented method (300) of claim 1, wherein the one or more bounding boxes to locate region of interests (ROI) are identified by,
marking one or more candidate regions based on overlaps identified between the one or more spatial precision segmentation (SPS) masks and the one or more spectral accuracy segmentation (SAS) masks exceeds a predefined threshold;
validating each candidate bounding box to confirm that it covers a minimum percentage of segmented pixels to avoid boxes with insufficient tea particle;
preventing overlapping bounding boxes by implementing a collision-detection mechanism, wherein a newly identified bounding box is repositioned, merged, or discarded if it intersects with an existing bounding box; and
mapping each validated bounding box coordinates into a raw spectral hypercube to facilitate direct extraction of reflectance profiles from each bounded region of interest.

3. The processor-implemented method (300) of claim 1, wherein the feature matrix is generated by,
extracting the plurality of morphological features from each bounding box of the one or more pixel level spatial precision segmentation (SPS) masks characterizing spatially segmented tea particles which includes at least one of particle size, aspect ratio, convexity, shape descriptors, and a texture analysis, wherein the texture analysis on each region of interest is performed using one or more texture metrics, and capturing surface granularity of tea particles;
extracting the plurality of spatial features by averaging spectral reflectance values from each bounding box coordinates of the one or more pixel level spectral accuracy segmentation (SAS) masks by obtaining a spectral reflectance profile indicative of chemical composition;
normalizing the spectral reflectance profile occurred due to illumination variations and camera sensitivity; and
generating the feature matrix by combining the plurality of morphological features and the plurality of spatial features.

4. The processor implemented method (300) of claim 1, wherein the blending quality score is computed by,
obtaining the feature matrix with reduced dimensionality by applying the DRA which transforms each bounding box feature vector into a lower dimensional representation;
classifying each bounding box transformed feature vector using a trained latent variable model (LVM) on known reference grades, and aggregating classifications across bounding boxes to determine an overall composition of each tea grade within the blend; and
computing the blending quality score (BQS) by comparing the estimated actual grade percentages with the target recipe proportions and categorizing the resulting blending quality score quality as high, medium, and low based on a predefined threshold,

5. The processor implemented method (300) of claim 4, wherein the blending quality score is categorized as (i) high if the actual grade value exceeds the target grade percentage, (ii) medium if minor deviations exist but remain within an operational tolerance, and (iii) low if significant deviations are detected and requires process correction.

6. The processor implemented method (300) of claim 1, wherein the blending consistency of each made-tea sample is determined by comparing a predicted grade distribution with the target recipe composition and assigning a weighted score based on deviation from the target composition.

7. The processor-implemented method (300) of claim 1, wherein the blending consistency validation is performed by,
applying a structural similarity index measure (SSIM) to compare the one or more spatial masks and the one or more spectral segmentation masks;
setting a similarity threshold to determine whether the tea blend is uniformly mixed; and
validating the blending consistency if the SSIM exceeds the structural similarity threshold confirming that the blend is properly mixed, and triggering corrective actions if the SSIM falls below the similarity threshold to identify blending inconsistencies.

8. The processor-implemented method (300) of claim 1, wherein the blending quality assessment report with personalized improvements includes a detailed breakdown of the blending quality score (BQS), and suggesting corrective actions for the tea factory, wherein the corrective actions includes (i) adjusting the tea grade proportions for specific tea grades in the blend, (ii) optimizing the mixing process by modifying duration, speed, sequence, and (iii) implementing a feedback loop including continuous monitoring and reassessment blending accuracy over successive production batches.

9. The processor-implemented method (300) of claim 1, wherein a reinforcement learning (RL) agent adjusts the blending process to optimize tea blend quality for minimizing operational overhead in tea factory by,
obtaining by the RL agent, to monitor at a defined state space, the plurality of morphological features, the plurality of spectral features, the blending quality score, the structural similarity index measure (SSIM), and a plurality of real time operational variables including a mixer, speed, blending duration and energy usage;
performing by the RL agent at every time step an action to be executed in the tea factory;
updating a change in state of the RL agent on successful execution of the action; and
assigning a reward for the RL agent at every time step by computing a weighted combination of in quality metrics and penalties for resource usage.

10. A system (100), to assess tea blend quality further comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
acquire by at least one spectral camera under controlled illumination, a spectral image of each made-tea sample among a plurality of made-tea samples, wherein the spectral camera captures the spectral image over a predetermined spectral wavelength range to form a multi-dimensional spectral hypercube, wherein each made-tea sample comprises a blend of different physical grade according to a target recipe;
pre-process each slice of the spectral image by reducing noise and normalizing illumination to reduce noise;
apply a dual segmentation technique on each slice of the pre-processed spectral image, to generate one or more spatial precision segmentation (SPS) masks using a spatial precision segmentation, and one or more spectral accuracy segmentation (SAS) masks using a spectral accuracy segmentation (SAS);
wherein the spatial precision segmentation is trained to detect one or more morphological boundaries from each tea particle associated with each slice of the pre-processed spectral image, and
wherein the spectral accuracy segmentation (SAS) is trained to cluster similar spectral reflectance profiles in the spectral hypercube from each tea particle associated with each slice of the pre-processed spectral image;
identify one or more bounding boxes to locate region of interests (ROI) by combining the one or more spatial precision segmentation (SPS) masks and the one or more spectral accuracy segmentation (SAS) masks superimposing the identified bounding boxes onto the original multi-dimensional spectral hypercube to extract region-specific spectral data corresponding to each ROI;
generate a feature matrix by fusing a plurality of morphological features and a plurality of spatial features obtained from each bounding box, wherein the plurality of morphological features are extracted from the one or more spatial precision segmentation (SPS) masks and the one or more spectral accuracy segmentation (SAS) masks;
apply a dimensionality reduction algorithm (DRA) on the feature matrix of each bounding box ROI to lower dimensional representations;
classify each bounding box to determine corresponding physical tea grade composition relative to the target recipe by computing a blending quality score (BQS) indicating the physical tea grade composition closeness match with the target recipe;
validate the blending consistency of each made tea sample by combining the one or more SPS masks and the one or more SAS masks to determine structural similarity; and
recommend the tea factory, a blending quality assessment report indicating personalized improvements to adjust blending process based on the blending consistency, the structural similarity, the blending quality score and one or more deviations occurred in the target recipe.

11. The system of claim 10, wherein the one or more bounding boxes to locate region of interests (ROI) are identified by,
marking one or more candidate regions based on overlaps identified between the one or more spatial precision segmentation (SPS) masks and the one or more spectral accuracy segmentation (SAS) masks exceeds a predefined threshold;
validating each candidate bounding box to confirm that it covers a minimum percentage of segmented pixels to avoid boxes with insufficient tea particle;
preventing overlapping bounding boxes by implementing a collision-detection mechanism, wherein a newly identified bounding box is repositioned, merged, or discarded if it intersects with an existing bounding box; and
mapping each validated bounding box coordinates into a raw spectral hypercube to facilitate direct extraction of reflectance profiles from each bounded region of interest.

12. The system of claim 10, wherein the feature matrix is generated by,
extracting the plurality of morphological features from each bounding box of the one or more pixel level spatial precision segmentation (SPS) masks characterizing spatially segmented tea particles which includes at least one of particle size, aspect ratio, convexity, shape descriptors, and a texture analysis, wherein the texture analysis on each region of interest is performed using one or more texture metrics, and capturing surface granularity of tea particles;
extracting the plurality of spatial features by averaging spectral reflectance values from each bounding box coordinates of the one or more pixel level spectral accuracy segmentation (SAS) masks by obtaining a spectral reflectance profile indicative of chemical composition;
normalizing the spectral reflectance profile occurred due to illumination variations and camera sensitivity; and
generating the feature matrix by combining the plurality of morphological features and the plurality of spatial features.

13. The system of claim 10, wherein the blending quality score is computed by,
obtaining the feature matrix with reduced dimensionality by applying the DRA which transforms each bounding box feature vector into a lower dimensional representation;
classifying each bounding box transformed feature vector using a trained latent variable model (LVM) on known reference grades, and aggregating classifications across bounding boxes to determine an overall composition of each tea grade within the blend; and
computing the blending quality score (BQS) by comparing the estimated actual grade percentages with the target recipe proportions and categorizing the resulting blending quality score quality as high, medium, and low based on a predefined threshold, wherein the blending quality score is categorized as (i) high if the actual grade value exceeds the target grade percentage, (ii) medium if minor deviations exist but remain within an operational tolerance, and (iii) low if significant deviations are detected and requires process correction.

14. The system of claim 10, wherein the blending consistency of each made-tea sample is determined by comparing a predicted grade distribution with the target recipe composition and assigning a weighted score based on deviation from the target composition;
wherein the blending quality assessment report with personalized improvements includes a detailed breakdown of the blending quality score (BQS), and suggesting corrective actions for the tea factory, wherein the corrective actions includes (i) adjusting the tea grade proportions for specific tea grades in the blend, (ii) optimizing the mixing process by modifying duration, speed, sequence, and (iii) implementing a feedback loop including continuous monitoring and reassessment blending accuracy over successive production batches; and
wherein the blending consistency validation is performed by,
applying a structural similarity index measure (SSIM) to compare the one or more spatial masks and the one or more spectral segmentation masks;
setting a similarity threshold to determine whether the tea blend is uniformly mixed; and
validating the blending consistency if the SSIM exceeds the structural similarity threshold confirming that the blend is properly mixed, and triggering corrective actions if the SSIM falls below the similarity threshold to identify blending inconsistencies.

15. One or more non-transitory machine-readable information storage mediums comprising one or more instructions which when executed by one or more hardware processors cause:
acquiring by at least one spectral camera under controlled illumination a spectral image of each made-tea sample among a plurality of made-tea samples, wherein the spectral camera captures the spectral image over a predetermined spectral wavelength range to form a multi-dimensional spectral hypercube, wherein each made-tea sample comprises a blend of different physical grade according to a target recipe;
pre-processing, each slice of the spectral image by normalizing illumination to reduce noise;
applying a dual segmentation technique on each slice of the pre-processed spectral image to generate one or more spatial precision segmentation (SPS) masks using a spatial precision segmentation, and a one or more spectral accuracy segmentation (SAS) masks using a spectral accuracy segmentation (SAS);
wherein the spatial precision segmentation is trained to detect one or more morphological boundaries from each tea particle associated with each slice of the pre-processed spectral image, and
wherein the spectral accuracy segmentation (SAS) is trained to cluster similar spectral reflectance profiles in the spectral hypercube from each tea particle associated with each slice of the pre-processed spectral image;
identifying one or more bounding boxes to locate region of interests (ROI) by combining the one or more spatial precision segmentation (SPS) masks and the one or more spectral accuracy segmentation (SAS) masks, superimposing the identified bounding boxes onto the original multi-dimensional spectral hypercube to extract region-specific spectral data corresponding to each ROI;
generating a feature matrix by fusing a plurality of morphological features and a plurality of spatial features obtained from each bounding box, wherein the plurality of morphological features are extracted from the one or more spatial precision segmentation (SPS) masks and the one or more spectral accuracy segmentation (SAS) masks;
applying, a dimensionality reduction algorithm (DRA) on the feature matrix of each bounding box ROI to lower dimensional representations;
classifying, each bounding box to determine corresponding physical tea grade composition relative to the target recipe by computing a blending quality score (BQS) indicating the physical tea grade composition closeness match with the target recipe;
validating, the blending consistency of each made tea sample by combining the one or more SPS masks and the one or more SAS masks to determine structural similarity; and
recommending the tea factory, a blending quality assessment report indicating personalized improvements to adjust blending process based on the blending consistency, the structural similarity, the blending quality score and one or more deviations occurred in the target recipe.
